# EUROPEAN PATENT APPLICATION

(11) **EP 4 524 485 A1**
(43) Date of publication of application: **19.03.2025**
(21) Application number: 22945462.4
(22) Date of filing: 28.07.2022
(51) Int. Cl.: F24F 11/64, F24F 11/54, F24F 11/50, F24F 11/89

(54) **AIR CONDITIONER CONTROL METHOD AND APPARATUS, AIR CONDITIONER, AND STORAGE MEDIUM**

(30) Priority: 10.06.2022 CN 202210654673
(71) Applicant: Foshan Shunde Midea Electric Science and Technology Co., Ltd., Foshan, Guangdong 528311 (CN); GD Midea Air-Conditioning Equipment Co., Ltd., Foshan, Guangdong 528311 (CN)
(72) Inventor: FAN, Qifeng, Foshan, Guangdong 528311 (CN); SHANG, Zhe, Foshan, Guangdong 528311 (CN); WANG, Bo, Foshan, Guangdong 528311 (CN); CHEN, Xinchang, Foshan, Guangdong 528311 (CN); DU, Shunkai, Foshan, Guangdong 528311 (CN); ZHANG, Shuhe, Foshan, Guangdong 528311 (CN)
(74) Representative: RGTH
(86) International application number: PCT/CN2022/108529
(87) International publication number: WO 2023/236328

(57) **Abstract**

The present application provides a method and a device for controlling an air conditioner, an air conditioner and a storage medium. The method for controlling the air conditioner of the present application includes: obtaining an input air conditioning demand in response to that an air conditioner turns on a multi-dimensional adjustment mode; determining a target dimensional parameter combination from the plurality of dimensional parameter combinations according to the air conditioning demand; and controlling the air conditioner to operate according to the target dimensional parameter combination.

## Description

### TECHNICAL FIELD

The present application relates to the technical field of air conditioners, and in particular to a method and device for controlling an air conditioner, an air conditioner and a storage medium.

### BACKGROUND

In the process of air conditioning, the current air conditioning equipment mainly realizes the combined control of multi-dimensional air through scenes. The multi-dimensional air combination method only controls the plurality of parameters in the combination to achieve the purpose of simulating different scenes. However, the existing control method does not give full play to the adjustment efficiency of the combination of the plurality of dimensions, and is urgently needed to be improved.

The above content is only used to assist in understanding the technical solution of the present application, and does not mean that the above content is recognized as prior art.

### TECHNICAL PROBLEMS

The main purpose of the present application is to provide a method and device for controlling an air conditioner, an air conditioner and a storage medium, aiming to solve the technical problem in the related art that the adjustment efficiency of the combination of the plurality of dimensions is not given full play.

### TECHNICAL SOLUTIONS

To achieve the above purpose, the present application provides a method for controlling an air conditioner, which includes the following steps.

The method for controlling the air conditioner includes:
obtaining an input air conditioning demand in response to that the air conditioner turns on a multi-dimensional adjustment mode, where the air conditioning demand includes at least one demand;
determining a target dimensional parameter combination from a plurality of dimensional parameter combinations according to the air conditioning demand; and
controlling the air conditioner to operate according to the target dimensional parameter combination.

In an embodiment, the determining the target dimensional parameter combination from the plurality of dimensional parameter combinations according to the air conditioning demand includes:
determining weight values of all preset demands according to the air conditioning demand; and
determining the target dimensional parameter combination from the plurality of dimensional parameter combinations according to the weight values of all preset demands.

In an embodiment, the determining the target dimensional parameter combination from the plurality of dimensional parameter combinations according to the weight values of all preset demands includes:
obtaining a score of each dimensional parameter combination on the preset demand;
calculating a combined score of each dimensional parameter combination according to the weight values of all preset demands and the score of each dimensional parameter combination on the preset demand; and
taking the dimensional parameter combination with a highest combined score as the target dimensional parameter combination.

In an embodiment, the method for controlling the air conditioner further includes:
obtaining an input dimensional parameter; the dimensional parameter includes at least one of temperature, humidity, air outlet setting, purification setting and fresh air setting; and
determining the plurality of dimensional parameter combinations including remaining dimensional parameters according to the input dimensional parameters, and executing the determining the target dimensional parameter combination from the plurality of dimensional parameter combinations according to the air conditioning demand.

In an embodiment, the method for controlling the air conditioner further includes:
after starting the air conditioner, in response to that the input dimension parameter is not detected, determining the target dimension parameter combination from the plurality of dimension parameter combinations according to weight values of all preset demands, and executing the controlling the operation of the air conditioner according to the target dimensional parameter combination; and
in response to that the input air conditioning demand is obtained, determining the weight value of the preset demand according to the air conditioning demand; in response to that the input air conditioning demand is not obtained, the weight value of the preset demand is a default weight value.

In an embodiment, before the determining the target dimensional parameter combination from the plurality of dimensional parameter combinations according to the air conditioning demand, the method further includes:
obtaining the plurality of dimensional parameter combinations, the dimensional parameter combination includes at least two dimensional parameters.

In an embodiment, the obtaining the plurality of dimensional parameter combinations includes:
calculating the plurality of dimensional parameter combinations with comfort level within a preset range according to human comfort level; or
determining the plurality of dimensional parameter combinations according to historical operation records.

In addition, to achieve the above purpose, the present application further provides a device for controlling an air conditioner, including:
an obtaining module, configured for obtaining an user's air conditioning demand in response to that the air conditioner turns on a multi-dimensional adjustment mode, where the air conditioning demand includes at least one demand;
a filtering module, configured for filtering a target dimensional parameter combination from the plurality of dimensional parameter combinations according to the air conditioning demand; and
a control module, configured for controlling the air conditioner to operate according to the target dimensional parameter combination.

In addition, to achieve the above purpose, the present application further provides an air conditioner, including a memory, a processor, and a program for controlling the air conditioner stored in the memory and running on the processor, the program for controlling the air conditioner is configured to implement the method for controlling the air conditioner as described above.

In addition, to achieve the above purpose, the present application further provides a storage medium, a program for controlling an air conditioner is stored on the storage medium, and the method for controlling the air conditioner as described above is implemented when the program for controlling the air conditioner is executed by a processor.

In the present application, by obtaining an input air conditioning demand in response to that an air conditioner turns on a multi-dimensional adjustment mode, determining a target dimensional parameter combination from the plurality of dimensional parameter combinations according to the air conditioning demand, and controlling the air conditioner to operate according to the target dimensional parameter combination; according to different air conditioning demand of users, based on the linkage relationship between various dimensional parameters, and automatically selecting the corresponding target dimensional parameter combination for the user, the user does not need to adjust the parameters of each dimension one by one, thus simplifying the user operation, improving the adjustment efficiency of the multi-dimensional combination, and enhancing the user experience.

### BRIEF DESCRIPTION OF THE DRAWINGS

FIG. 1 is a schematic structural diagram of an air conditioner of hardware operating environment involved in an embodiment of the present application.
FIG. 2 is a schematic flow chart of a method for controlling an air conditioner according to a first embodiment of the present application.
FIG. 3 is a schematic flow chart of a method for controlling an air conditioner according to a second embodiment of the present application.
FIG. 4 is a schematic flow chart of a method for controlling an air conditioner according to a third embodiment of the present application.
FIG. 5 is a structural block diagram of a device for controlling the air conditioner according to a first embodiment of the present application.

The realization of the purpose, functional features and advantages of the present application will be further described in conjunction with the embodiments and with reference to the accompanying drawings.

### DETAILED DESCRIPTION OF THE EMBODIMENTS

It should be understood that the specific embodiments described here are only used to explain the present application and are not used to limit the present application.

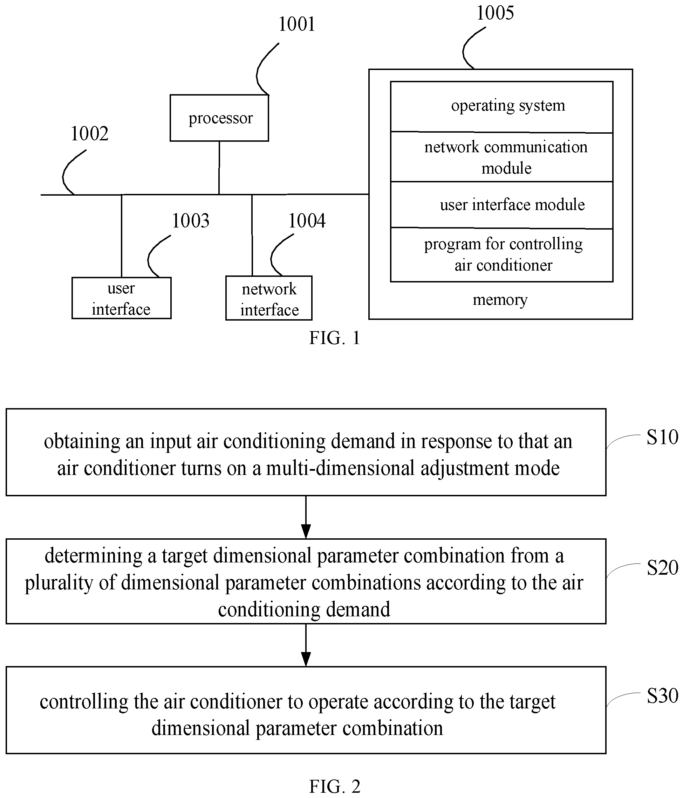

Referring to FIG. 1, FIG. 1 is a schematic structural diagram of an air conditioner of hardware operating environment involved in an embodiment of the present application.

As shown in FIG. 1, the air conditioner may include: a processor 1001, such as a Central Processing Unit (CPU), a communication bus 1002, a user interface 1003, a network interface 1004, a memory 1005 and a fresh air device. The communication bus 1002 is configured to realize connection communication among these components. The user interface 1003 may include a display, an input unit such as a keyboard. The user interface 1003 may further include a standard wired interface or a wireless interface. In an embodiment, the network interface 1004 may include a standard wired interface or a wireless interface (such as a Wireless-Fidelity (Wi-Fi) interface). The memory 1005 can be a high-speed Random Access Memory (RAM), or a stable memory (Non-volatile Memory, NVM), such as a disk memory. In an embodiment, the memory 1005 may further be a storage device independent of the aforementioned processor 1001.

Those skilled in the art can understand that the structure shown in FIG. 1 does not constitute a limitation on the air conditioner, and may include more or less components, or a combination of certain components, or differently arranged components than shown in the figure.

As shown in FIG. 1, the memory 1005 as a storage medium may include an operating system, a network communication module, a user interface module, and a program for controlling an air conditioner.

In the air conditioner shown in FIG. 1, the network interface 1004 is mainly configured for data communication with the network server; the user interface 1003 is mainly configured for data interaction with the user; the processor 1001 and the memory 1005 in the air conditioner of the present application can be set in the air conditioner. The air conditioner calls the program for controlling the air conditioner stored in the memory 1005 by the processor 1001, and executes the method for controlling the air conditioner provided by the embodiment of the present application.

The embodiment of the present application provides a method for controlling an air conditioner. Referring to FIG. 2, FIG. 2 is a schematic flow chart of a method for controlling an air conditioner according to a first embodiment of the present application.

In an embodiment, the method for controlling the air conditioner includes the following steps.

Step S10: obtaining an input air conditioning demand in response to that an air conditioner turns on a multi-dimensional adjustment mode, where the air conditioning demand includes at least one demand.

In an embodiment, the execution subject may be the device for controlling air conditioner, which has functions such as data processing, data communication and program running. The device for controlling the air conditioner may be computer device such as a tablet, a computer or a server. Certainly, it may further be other devices with similar functions, and this implementation condition does not limit this. For ease of explanation, the present application takes the device for controlling the air conditioner as an example for explanation.

It should be noted that the current multi-dimensional parameter adjustment of the air conditioner is based on different user's usage scenes. According to different scenes, adjusting the corresponding parameters of the air conditioner, for example, adjusting the temperature parameters of the air conditioner, and for another example, adjusting the humidity parameters of the air conditioner. However, the current adjustment method is only related to the scene, and each parameter will not be affected by other parameters when adjusted. For example, when adjusting the humidity parameters of the air conditioner, it is not necessary to consider the temperature parameters of the air conditioner, and there is no inherent linkage between each parameter. However, in actual situations, in the situation that the humidity parameters of the air conditioner remain unchanged, if the humidity parameters of the air conditioner change, it will also affect the user's comfort. In order to meet their own comfort needs, after adjusting the temperature parameters of the air conditioner, the user further need to adjust the humidity parameters of the air conditioner. This method requires the user to adjust each parameter in the multi-dimensional parameters one by one, the operation is cumbersome, thus reducing the user experience.

In order to solve the above technical problems, a suitable dimensional parameter combination is selected for the user according to the actual needs of the user, and each dimensional parameter in each dimensional parameter combination has a linkage relationship. When the user's needs change, each dimensional parameter in the dimensional parameter combination will also be automatically adjusted based on the linkage relationship.

In an embodiment, after detecting that the multi-dimensional adjustment mode is turned on, obtaining the air conditioning demand input by the user. The air conditioning demand includes but is not limited to comfort level, energy saving degree and health level, and other air conditioning demands can be further set. The above comfort level, energy saving degree and health level are used for example. In an embodiment, the adjustment demand of the air conditioner includes at least one demand, for example, the air conditioning demand is comfort level, which indicates that the user needs to ensure his own comfort level at this time, and for another example, the air conditioning demand is comfort level and energy saving degree, which indicates that the user needs to ensure the energy-saving operation of the air conditioner while ensuring his own comfort level at this time.

Step S20: determining a target dimensional parameter combination from the plurality of dimensional parameter combinations according to the air conditioning demand.

It should be noted that the dimensional parameter combinations are composed of five parameters: temperature, humidity, air outlet setting, purification setting, and fresh air setting. For different air conditioning demands, the parameter values of each dimension in the parameter combination are different. For example, when the user's air conditioning demand is health level, a relatively high fresh air setting is required. For another example, when the user's air conditioning demand is energy saving degree, the temperature, humidity, air outlet setting, purification setting, and fresh air setting need to be adjusted until the air conditioner has a relatively low operating power.

In an embodiment, the plurality of dimensional parameter combinations are preset, and a target dimensional parameter combination can be determined from the plurality of dimensional parameter combinations based on air conditioning demand. When the user's air conditioning demand is the health level, the dimensional parameter combination with the highest fresh air setting is selected from the plurality of dimensional parameter combinations as the target dimensional parameter combination.

It should be emphasized that in an embodiment, each dimensional parameter combination in the plurality of dimensional parameter combinations includes at least two dimensional parameters, that is, at least two parameters of temperature, humidity, air outlet setting, purification setting, and fresh air setting.

Furthermore, in an embodiment, the plurality of dimensional parameter combinations belong to candidate parameter combinations. After determining the plurality of dimensional parameter combinations, selecting a target parameter combination from the plurality of dimensional parameter combinations according to the air conditioning demand of the user. However, in actual situations, not all parameter combinations can be used as candidate parameter combinations, and filtering is performed in advance.

In an embodiment, filtering can be performed according to human comfort level. Specifically, calculating the plurality of dimensional parameter combinations with comfort level within a preset range, the preset range of comfort level can be set to |PMV| ≤0.2, where PMV is human comfort level. It further can be set to other values according to the user's own needs, and the present application does not limit this.

In an embodiment, it further can use historical operation records, the historical operation records contain the user's adjustment records of each dimensional parameter of the air conditioner, and selecting the plurality of dimensional parameter combinations with the highest frequency of occurrence according to the historical operation records.

Step S30: controlling the air conditioner to operate according to the target dimensional parameter combination.

In an embodiment, after determining the target parameter combination, controlling the operation of the air conditioner according to the temperature, humidity, air outlet setting, purification setting and fresh air setting corresponding to the target parameter combination, so as to meet the air conditioning demand of the user.

In an embodiment, by obtaining an input air conditioning demand in response to that an air conditioner turns on a multi-dimensional adjustment mode, determining a target dimensional parameter combination from the plurality of dimensional parameter combinations according to the air conditioning demand, and controlling the air conditioner to operate according to the target dimensional parameter combination; according to different air conditioning demand of users, based on the linkage relationship between various dimensional parameters, and automatically selecting the corresponding target dimensional parameter combination for the user. The user does not need to adjust the parameters of each dimension one by one, thus simplifying the user operation, improving the adjustment efficiency of the multi-dimensional combination, and enhancing the user experience.

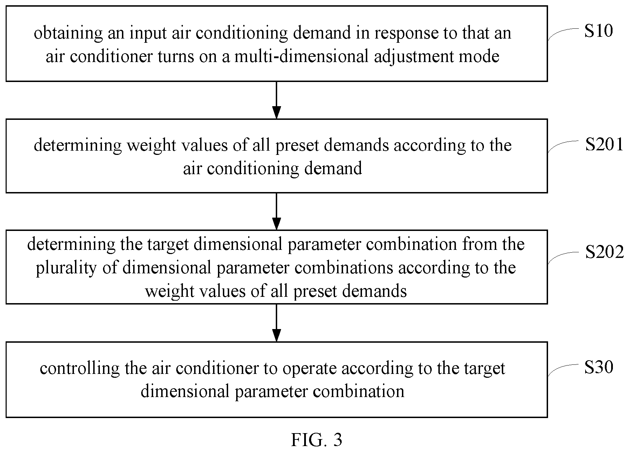

Referring to FIG. 3, FIG. 3 is a schematic flow chart of a method for controlling an air conditioner according to a second embodiment of the present application.

Based on the above first embodiment, in the method for controlling the air conditioner, the step S20 specifically includes:
Step S201: determining weight values of all preset demands according to the air conditioning demand.

In an embodiment, each preset demand contained in each different air conditioning demand has a corresponding weight value, and the preset demand includes energy saving degree, comfort level and health level. For example, when the user's air conditioning demand is a demand of energy saving degree, the weight value of energy saving degree, the weight value of comfort level and the weight value of health level are 1, 0 and 0 respectively. For another example, when the user's air conditioning demand is the plurality of demands, that is, when the user demands energy saving degree, comfort level and health level at the same time, the weight value of energy saving degree, the weight value of comfort level and the weight value of health level are 0.2, 0.6 and 0.2 respectively. In an embodiment, the weight value can further be adjusted according to the actual situation, and there is no limitation on this. If there is a situation where the user does not input the air conditioning demand, a default weight value may be set for each preset demand, and the default weight value may be set according to the actual needs of the user, and there is no restriction on this.

Step S202: determining the target dimensional parameter combination from the plurality of dimensional parameter combinations according to the weight values of all preset demands.

In an embodiment, the target dimensional parameter combination may be determined from the plurality of dimensional parameter combinations according to the obtained weight values.

Specifically, after determining the weight value corresponding to each preset demand, further obtaining a score of each dimensional parameter combination on the preset demand. For example, the score corresponding to combination A is 0.3 for energy saving degree, 0.7 for comfort level and 0.2 for health level, and the score corresponding to combination B is 0.4 for energy saving degree, 0.6 for comfort level and 0.2 for health level. Then, according to the weight value and the score, the combined score corresponding to each dimensional parameter can be calculated. Finally, taking the dimensional parameter combination with a highest combined score as the target dimensional parameter combination

For example, assuming that according to the air conditioning demand input by the user, obtaining the weight value of energy saving degree, the weight value of comfort level and the weight value of health level are 0.2, 0.6 and 0.2 respectively, and the plurality of dimensional parameter combinations are A, B and C respectively. The score corresponding to dimensional parameter combination A is 0.3 for energy saving degree, 0.7 for comfort level and 0.2 for health level, the score corresponding to dimensional parameter combination B is 0.4 for energy saving degree, 0.6 for comfort level and 0.2 for health level, and the score corresponding to dimensional parameter combination C is 0.5 for energy saving degree, 0.5 for comfort level and 0.3 for health level. According to the above weight values and scores, it can be calculated that the combined score of dimensional parameter combination A is 0.3*0.2+0.7*0.6+0.2*0.2=0.52, the combined score of dimensional parameter combination B is 0.4*0.2+0.6*0.6+0.2*0.2=0.48, and the combined score of dimensional parameter combination C is 0.5*0.2+0.5*0.6+0.4*0.2=0.46. Finally, it can be determined that dimensional parameter combination A is the target dimensional parameter combination.

In an embodiment, by determining weight values of all preset demands according to the air conditioning demand, obtaining a score of each dimensional parameter combination on the preset demand; calculating a combined score of each dimensional parameter combination according to the weight values of all preset demands and the score of each dimensional parameter combination on the preset demand; taking the dimensional parameter combination with a highest combined score as the target dimensional parameter combination; calculating the combined score of each dimensional parameter combination by the weight values of the preset demand and the score of each dimensional parameter combination on the preset demand; and determining the final target dimensional parameter combination according to the combined score, the obtained target dimensional parameter is more accurate and reasonable, and better meeting the demand of the user.

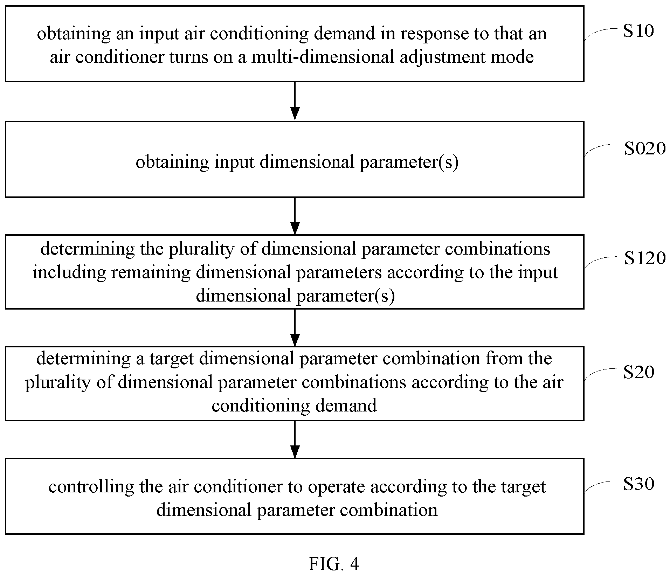

Referring to FIG. 4, FIG. 4 is a schematic flow chart of a method for controlling an air conditioner according to a third embodiment of the present application.

Based on the above first embodiment, the third embodiment of the method for controlling the air conditioner of the present application is provided.

In an embodiment, before the step S20, the method further includes:
Step S020: obtaining input dimensional parameter(s).

It should be noted that after the user completes the input of the air conditioning demand, the user can further input the dimensional parameter. The dimensional parameter includes at least one of temperature, humidity, air outlet setting, purification setting and fresh air setting. For example, the user inputs the requirement of comfort level and further sets the air outlet temperature of the air conditioner. For another example, the user inputs the requirements of comfort level and energy saving degree, and further sets the air outlet temperature and humidity of the air conditioner.

Step S120: determining the plurality of dimensional parameter combinations including remaining dimensional parameters according to the input dimensional parameter(s).

In an embodiment, the multi-dimensional parameter includes temperature, humidity, air outlet setting, purification setting, and fresh air setting. The parameters of these five dimensions can be combined to form the plurality of dimensional parameter combinations, and each dimensional parameter combination has the parameters of the above five dimensions. After determining the dimensional parameter input by the user, combining the remaining dimensional parameters, and then forming the plurality of dimensional parameter combinations including the dimensional parameter input by the user.

For example, when the input dimensional parameter is temperature, the remaining dimensional parameters are humidity, air outlet setting, purification setting and fresh air setting. Combining the humidity, air outlet setting, purification setting and fresh air setting. After obtaining the plurality of combinations, adding the temperature input by the user, so as to obtain the plurality of dimensional parameter combinations, and the temperature in each multi-dimensional parameter combination is the same. For another example, when the input dimensional parameter is temperature and humidity, the remaining dimensional parameters are air outlet setting, purification setting and fresh air setting. Combining the air outlet setting, purification setting and fresh air setting. After obtaining the plurality of combinations, adding the temperature and humidity input by the user, so as to obtain the plurality of dimensional parameter combinations, and the temperature and humidity in each multi-dimensional parameter combination are the same. It should be emphasized that in the subsequent linkage adjustment process, the dimensional parameter input by the user remains unchanged, and only the dimension parameters not input by other users are adjusted.

Furthermore, if the user does not input the dimensional parameter, combining the parameters of the five dimensions of temperature, humidity, air outlet setting, purification setting and fresh air setting, and obtaining the plurality of dimensional parameter combinations.

In an embodiment, by obtaining an input dimensional parameter, determining the plurality of dimensional parameter combinations including remaining dimensional parameters according to the input dimensional parameters, before adjusting the parameters, first determining the appropriate candidate dimensional parameter for determining the target parameter combination, so that the target parameter combination filtered later is more in line with the user's habits, thereby improving the user experience.

In addition, the embodiment of the present application further provides a storage medium, a program for controlling an air conditioner is stored on the storage medium, and the method for controlling the air conditioner described above is implemented when the program for controlling the air conditioner is executed by a processor.

Since the storage medium adopts all the technical solutions of all the above embodiments, it has at least all the beneficial effects brought by the technical solutions of the above embodiments, which will not be repeated here.

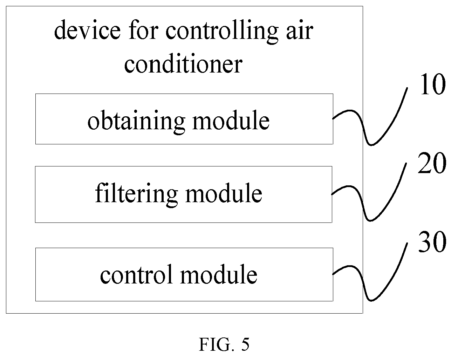

Referring to FIG. 5, FIG. 5 is a structural block diagram of the device for controlling the air conditioner according to the first embodiment of the present application.

As shown in FIG. 5, the device for controlling the air conditioner provided in the embodiment of the present application includes an obtaining module 10, a filtering module 20 and a control module 30.

The obtaining module 10 is configured for obtaining a user's air conditioning demand in response to that an air conditioner turns on a multi-dimensional adjustment mode.

It should be noted that the current multi-dimensional parameter adjustment of the air conditioner is based on different user's usage scenes. According to different scenes, adjusting the corresponding parameters of the air conditioner, for example, adjusting the temperature parameters of the air conditioner, and for another example, adjusting the humidity parameters of the air conditioner. However, the current adjustment method is only related to the scene, and each parameter will not be affected by other parameters when adjusted. For example, when adjusting the humidity parameters of the air conditioner, it is not necessary to consider the temperature parameters of the air conditioner, and there is no inherent linkage between each parameter. However, in actual situations, in the situation that the humidity parameters of the air conditioner remain unchanged, if the humidity parameters of the air conditioner change, it will also affect the user's comfort. In order to meet their own comfort needs, after adjusting the temperature parameters of the air conditioner, the user further need to adjust the humidity parameters of the air conditioner. This method requires the user to adjust each parameter in the multi-dimensional parameters one by one, the operation is cumbersome, thus reducing the user experience.

In order to solve the above technical problems, a suitable dimensional parameter combination is selected for the user according to the actual needs of the user, and each dimensional parameter in each dimensional parameter combination has a linkage relationship. When the user's needs change, each dimensional parameter in the dimensional parameter combination will also be automatically adjusted based on the linkage relationship.

In an embodiment, after detecting that the multi-dimensional adjustment mode is turned on, obtaining the air conditioning demand input by the user. The air conditioning demand includes but is not limited to comfort level, energy saving degree and health level, and other air conditioning demands can be further set. The above comfort level, energy saving degree and health level are used for example. In an embodiment, the adjustment demand of the air conditioner includes at least one demand, for example, the air conditioning demand is comfort level, which indicates that the user needs to ensure his own comfort level at this time, and for another example, the air conditioning demand is comfort level and energy saving degree, which indicates that the user needs to ensure the energy-saving operation of the air conditioner while ensuring his own comfort level at this time.

The filtering module 20 is configured for filtering a target dimensional parameter combination from the plurality of dimensional parameter combinations according to the air conditioning demand.

It should be noted that the dimensional parameter combinations are composed of five parameters: temperature, humidity, air outlet setting, purification setting, and fresh air setting. For different air conditioning demands, the parameter values of each dimension in the parameter combination are different. For example, when the user's air conditioning demand is health level, a relatively high fresh air setting is required. For another example, when the user's air conditioning demand is energy saving degree, the temperature, humidity, air outlet setting, purification setting, and fresh air setting need to be adjusted until the air conditioner has a relatively low operating power.

In an embodiment, the plurality of dimensional parameter combinations are preset, and a target dimensional parameter combination can be determined from the plurality of dimensional parameter combinations based on air conditioning demand. When the user's air conditioning demand is health level, the dimensional parameter combination with the highest fresh air setting is selected from the plurality of dimensional parameter combinations as the target dimensional parameter combination.

It should be emphasized that in an embodiment, each dimensional parameter combination in the plurality of dimensional parameter combinations includes at least two dimensional parameters, that is, at least two parameters of temperature, humidity, air outlet setting, purification setting, and fresh air setting.

Furthermore, in an embodiment, the plurality of dimensional parameter combinations belong to candidate parameter combinations. After determining the plurality of dimensional parameter combinations, selecting a target parameter combination from the plurality of dimensional parameter combinations according to the air conditioning demand of the user. However, in actual situations, not all parameter combinations can be used as candidate parameter combinations, and screening is performed in advance.

In an embodiment, screening can be performed according to human comfort level. Specifically, calculating the plurality of dimensional parameter combinations with comfort level within a preset range, the preset range of comfort level can be set to |PMV| ≤0.2, where PMV is human comfort level. It further can be set to other values according to the user's own needs, and the present application does not limit this.

In an embodiment, it further can use historical operation records, the historical operation records contain the user's adjustment records of each dimensional parameter of the air conditioner, and selecting the plurality of dimensional parameter combinations with the highest frequency of occurrence according to the historical operation records.

The control module 30 is configured for controlling the air conditioner to operate according to the target dimensional parameter combination.

In an embodiment, after determining the target parameter combination, controlling the operation of the air conditioner according to the temperature, humidity, air outlet setting, purification setting and fresh air setting corresponding to the target parameter combination, so as to meet the air conditioning demand of the user.

In an embodiment, by obtaining an input air conditioning demand in response to that an air conditioner turns on a multi-dimensional adjustment mode, determining a target dimensional parameter combination from the plurality of dimensional parameter combinations according to the air conditioning demand, and controlling the air conditioner to operate according to the target dimensional parameter combination; according to different air conditioning demand of users, based on the linkage relationship between various dimensional parameters, and automatically selecting the corresponding target dimensional parameter combination for the user, the user does not need to adjust the parameters of each dimension one by one, thus simplifying the user operation, improving the adjustment efficiency of the multi-dimensional combination, and enhancing the user experience.

It should be understood that the above is only an example and does not constitute any limitation on the technical solution of the present application. In specific applications, those skilled in the art can set it according to the needs, and the present application does not limit it.

It should be noted that the workflow described above is only illustrative and does not limit the scope of the present application. In practical applications, technicians in this field can select part or all of them according to the actual needs to achieve the purpose of the scheme of this embodiment, and no limitation is made here.

In addition, the technical details not described in detail in the present application can refer to the method for controlling the air conditioner provided in any embodiment of the present application, which will not be repeated here.

In addition, it should be noted that in this article, the terms "comprise", "include" or any other variation thereof are intended to cover a non-exclusive inclusion, such that a process, method, article or system that includes a list of elements not only includes those elements, but also includes other elements not expressly listed, or also includes elements inherent to the process, method, article or system. In a case of without further restrictions, an element defined by the statement "includes a/an......" does not exclude the existence of other identical elements in a process, method, article or system that includes this element.

The above serial numbers of the embodiments of the present application are only for description and do not represent the advantages and disadvantages of the embodiments.

By the above description of the embodiments, those skilled in the art can clearly understand that the methods of the above embodiments can be implemented by means of software plus the necessary general hardware platform, and they can also be done by hardware certainly, but in many cases the former is the better implementation. Based on this understanding, the technical solution of the present application essentially or the part that contributes to the related art can be embodied in the form of a software product, the computer software product is stored in a storage medium (such as Read Only Memory image (ROM) / Random Access Memory (RAM), diskette, optical disk), which includes several instructions to cause a terminal device (which can be a mobile phone, computer, server, or network device, etc.) to execute the methods described in various embodiments of the present application.

The above are only some embodiments of the present application, and are not intended to limit the scope of the present application. Under the concept of the present application, any equivalent structure transformation made by using the description and accompanying drawings of the present application, or directly or indirectly applied in other related technical fields, is included within the scope of the present application.

## Claims

1. A method for controlling an air conditioner, comprising:
obtaining an input air conditioning demand in response to a multi-dimensional adjustment mode of the air conditioner being turned on, wherein the air conditioning demand comprises at least one demand;
determining a target dimensional parameter combination from a plurality of dimensional parameter combinations according to the air conditioning demand; and
controlling the air conditioner to operate according to the target dimensional parameter combination.

2. The method for controlling the air conditioner according to claim 1, wherein determining the target dimensional parameter combination comprises:
determining weight values of preset demands according to the air conditioning demand; and
determining the target dimensional parameter combination from the plurality of dimensional parameter combinations according to the weight values of the preset demands.

3. The method for controlling the air conditioner according to claim 2, wherein determining the target dimensional parameter combination according to the weight values of the preset demands comprises:
obtaining scores of each dimensional parameter combination on the preset demands;
calculating a combined score of each dimensional parameter combination according to the weight values of the preset demands and the score of the dimensional parameter combination on the preset demands; and
determining the dimensional parameter combination with a highest combined score as the target dimensional parameter combination.

4. The method for controlling the air conditioner according to claim 1, further comprising:
obtaining one or more input dimensional parameters each being one of temperature, humidity, air outlet setting, purification setting and fresh air setting; and
determining, according to the one or more input dimensional parameters, the plurality of dimensional parameter combinations each including the one or more input dimensional parameters and one or more remaining dimensional parameters.

5. The method for controlling the air conditioner according to claim 4, :
after the air conditioner is started, in response to not detecting one or more input dimension parameters, determining the target dimension parameter combination from the plurality of dimension parameter combinations according to weight values of preset demands, and executing the controlling the operation of the air conditioner according to the target dimensional parameter combination; and
in response to that the input air conditioning demand is obtained, determining the weight value of the preset demand according to the air conditioning demand; in response to that the input air conditioning demand is not obtained, the weight value of the preset demand is a default weight value.

6. The method for controlling the air conditioner according to claim 1, wherein before the determining the target dimensional parameter combination, the method further comprises:
obtaining the plurality of dimensional parameter combinations, each of the plurality of dimensional parameter combinations comprising at least two dimensional parameters.

7. The method for controlling the air conditioner according to claim 6, wherein obtaining the plurality of dimensional parameter combinations comprises:
calculating the plurality of dimensional parameter combinations with comfort level within a preset range according to human comfort level; or
determining the plurality of dimensional parameter combinations according to historical operation records.

8. A device for controlling an air conditioner, comprising:
an obtaining module, configured for obtaining an user's air conditioning demand in response to that the air conditioner turns on a multi-dimensional adjustment mode, wherein the air conditioning demand comprises at least one demand;
a filtering module, configured for filtering a target dimensional parameter combination from multiple dimensional parameter combinations according to the air conditioning demand; and
a control module, configured for controlling the air conditioner to operate according to the target dimensional parameter combination.

9. An air conditioner, comprising:
a memory storing a program; and
a processor configured to execute the program to:
a program for controlling the air conditioner stored in the memory and running on the processor,
wherein the program for controlling the air conditioner is configured to implement the method for controlling the air conditioner according to any one of claims 1 to 7.

10. A storage medium, wherein a program for controlling an air conditioner is stored on the storage medium, and the method for controlling the air conditioner according to any one of claims 1 to 7 is implemented when the program for controlling the air conditioner is executed by a processor.
